# EUROPÄISCHE PATENTSCHRIFT

(11) **EP 1 287 945 B1**
(45) Veröffentlichungstag und Bekanntmachung des Hinweises auf die Patenterteilung: **03.11.2004**
(21) Anmeldenummer: 02017786.1
(22) Anmeldetag: 12.08.2002
(51) Int. Cl.: B23Q 1/01, B23Q 1/54

(54) **Universal-Fräs- und Bohrmaschine**
Universal milling and boring machine
Fraiseuse-aléseuse universelle

(30) Priorität: 27.08.2001 DE 10141865
(43) Veröffentlichungstag der Anmeldung: 05.03.2003
(73) Patentinhaber: DECKEL MAHO Pfronten GmbH, D-87459 Pfronten (DE)
(72) Erfinder: Gronbach, Hans Dr., 87637 Eisenberg (DE); Hoppe, Gerd, 34317 Habichtswald (DE)
(74) Vertreter: Beetz & Partner Patentanwälte

(56) Entgegenhaltungen:
- EP-A- 0 842 727
- DE-A- 19 938 058
- GB-A- 2 143 498
- US-A- 6 099 217

## Beschreibung

Die Erfindung betrifft eine programmgesteuerte Universal-Fräs- und Bohrmaschine mit einem horizontalen Unterbau als Träger eines Werkstücktisches, mit einem Maschinengestell und mit einem Tragsystem für mindestens einen Spindelkopf, das ein formsteifes Zentralrohr, einen an dessen unterem Ende befestigten Spindelkopfträger, drei um 120° im Raum winkelversetzt angeordnete Teleskopstäbe, die kardanisch am Spindelkopfträger angelenkt sind, sowie ein oberes Tragteil enthält, das Universallager für das Zentralrohr und für jeden Teleskopstab aufweist, wie dies z.B. aus DE 19 938 058 A bekannt ist.

Eine derartige Werkzeugmaschine wird von der Firma NEOS ROBOTICS unter der Systembezeichnung tricept® in verschiedenen Ausführungen hergestellt. Alle bekanntgewordenen Maschinen sind zur Bearbeitung von großflächigen Werkstücken, wie Großteilen von Flugzeugen, konzipiert und verfügen über entsprechend lang ausgelegte verfahrbare Werkstücktische zur Aufnahme und genauen Fixierung dieser Werkstücke bzw. über sog. Fahrständer, die in entsprechend langen Führungsschienen seitlich neben dem Werkstück verfahren können und an denen das Tragsystem der Bearbeitungseinheit befestigt ist. Die Grundachsen sind als Parallelkinematik und die Kopfachsen als serielle Achsen ausgeführt.

In der Zeitschrift VDI-Z 143 (2001), Nr. 6- Juni, S. 38 bis 40 ist in dem Artikel "Bearbeitungszentrum mit Tripodentechnik" von Dr. Werner Eberlein und Ulrich Schleider eine Universal-Werkzeugmaschine beschrieben, bei welcher die den Fräskopf tragende Bearbeitungseinheit in Tripoden-Technik ausgeführt ist. Das Spindeltraggehäuse wird hier von drei Dreieckslenkern über je ein Gelenk mit drei Freiheitsgraden getragen und bewegt, wobei jeder Dreieckslenker gelenkig mit einem zugehörigen linearen Führungssystem verbunden ist. Die Führungssysteme befinden sich in einem zylindrischen Aufnahmekörper. Die Längsbewegungen der integrierten Schlitten erfolgen über Kugelrollspindeln und Servoantriebe. Bei diesem System kann die Arbeitsspindel mit integriertem Antriebsmotor in einem Raumwinkel von 80° bewegt werden. Auch diese Maschinentypen sind zur Bearbeitung von extrem großflächigen Werkstücken, insbesondere von großen Strukturteilen, etwa im Tragflächenbereich, konzipiert, die Bauteillängen von 2,5 m haben können, wobei Verfahrwege von bis zu 30 m möglich sein sollen.

Aufgabe der Erfindung ist es, eine gattungsgemäße Universal-Fräsund Bohrmaschine zu schaffen, die bei kompaktem Aufbau eine hohe Bearbeitungsgenauigkeit durch eine extreme Steifigkeit ihrer Baugruppen und hochgenaue Werkzeugpositionierung gewährleistet.

Diese Aufgabe wird durch die Merkmale des Anspruchs 1 gelöst.

Die Ausbildung des Maschinengestells in kastenähnlicher Form mit dem integrierten Unterbau des Werkstücktisches gewährleistet eine außerordentlich hohe Steifigkeit zum Erhalt höchster Bearbeitungsgenauigkeiten. Die Schräglage des Tragelementes für das Zentralrohr mit dem Bearbeitungskopf sowie für die drei Teleskopstangen ergibt eine besonders günstige Position des am Ende des Tragrohres montierten Spindelkopfes im Arbeitsraum, sowie gleichmäßigere Belastungen gegenüber einer vertikalen oder horizontalen Anordnung des Tragelements. Insgesamt ist die erfindungsgemäße Werkzeugmaschine äußerst kompakt und erfordert nur eine entsprechend kleine Aufstellfläche. Durch den auf dem Unterbau stationären Tisch wird die vorteilhafte Drei-Punkt-Aufstellung der Maschine möglich.

Eine besonders zweckmäßige Ausgestaltung der erfindungsgemäßen Universal-Maschine zeichnet sich dadurch aus, daß das Tragteil des Tragsystems als flacher formsteifer Schlitten ausgeführt und in Horizontalführungen der Traverse und der Rückwand motorisch verfahrbar ist. Diese Verfahrbarkeit des Schlittens und damit auch der Bearbeitungseinheit ermöglicht die jeweils optimale Positionierung des Werkzeugkopfes relativ zum Werkstück. Da die Massen des Schlittens und der von ihm getragenen Bauteile relativ gering und praktisch konstant sind, ergeben sich weitere Vorteile hinsichtlich der Auslegung und Wirksamkeit der Antriebs- und Steuerungsaggregate für die Schlittenbewegungen.

Zweckmäßig hat der Schlitten eine annähernd dreieckige Form und ist mit seiner längeren Rückseite über zwei endseitige Führungselemente auf einer an der Rückwand montierten Führungsschiene sowie mit seiner kürzeren Frontseite über mindestens ein Führungselement an einer an der vorderen oberen Traverse montierten Führungsschiene abgestützt. Diese Form und Abstützung des Schlittens ergibt eine günstige Einleitung der bei der Bearbeitung auftretenden Kräfte vom Schlitten in das Maschinengestell, und zwar auch bei extrem ausgelenktem Bearbeitungswerkzeug.

Eine Besonderheit der erfindungsgemäßen Werkzeugmaschine gegenüber dem vorgenannten Stand der Technik besteht noch in der einteiligen Ausbildung des Zentralrohres gegenüber den bekannten mehrteiligen Ausführungen, bei denen die verschiedenen Einzelteile während der Montage relativ zueinander ausgerichtet und fixiert werden müssen, wobei hierdurch Ungenauigkeiten im Positionierverhalten auftreten können. Durch die einteilige Rohrausbildung erübrigt sich ein Ausrichtaufwand und die Genauigkeit in der Lage der Universalgelenke zu den als Linearführungen wirkenden Teleskopstäben wird direkt bei der Fertigung erzeugt, wodurch geringere Toleranzen eingehalten werden können.

Weitere zweckmäßige Ausgestaltungen der Erfindung sind in den Unteransprüchen angegeben.

Im folgenden werden bevorzugte Ausführungsbeispiele der erfindungsgemäßen Universal-Werkzeugmaschine anhand der Zeichnung im einzelnen beschrieben. Es zeigen:
- Fig. 1: eine Universal-Fräs- und Bohrmaschine in perspektivischer Darstellung;
- Fig. 2: eine Variante der Maschine nach Fig. 1 mit einem Doppeltisch;
- Fig. 3: eine perspektivische Rückansicht der Maschine nach Fig. 1;
- Fig. 4: das Tragsystem des Spindelkopfes mit dem schlittenförmigen Tragglied in schräger Vorderansicht (a) sowie in Seitenansicht (b); und
- Fig. 5: das Zentralrohr des Tragsystems im Axialschnitt.

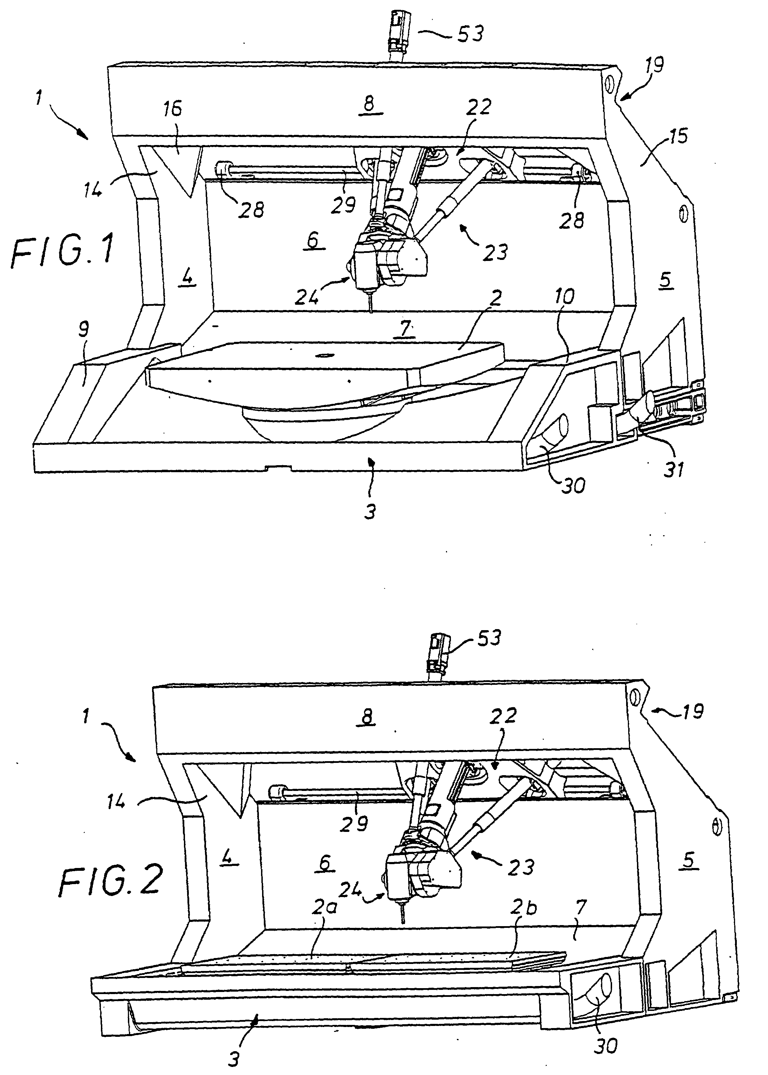

Die in Fig. 1 dargestellte Werkzeugmaschine enthält ein extrem steifes Maschinengestell 1 und als Träger eines Werkstücktisches 2 einen horizontalen Unterbau 3, der in das Maschinengestell integriert ist. Das Maschinengestell ist in Form eines nach vorn offenen Kastens ausgebildet und besteht aus zwei vertikalen Seitenwänden 4, 5, einer vertikalen Rückwand 6, einem schräg nach unten vorne weisenden Bodenteil 7, an den die Seitenwände 4, 5 und die Rückwand 6 anschließen, sowie aus einer oberen vorderen Quertraverse 8, welche die Seitenwände 4, 5 in ihrem obersten Teil miteinander verbindet. Die Seitenwände 4, 5 haben jeweils einen breiteren Unterteil, an den sich jeweils die eine Seitenwandung 9, 10 des Unterbaus 3 anschließt, einen schmaleren Mittelteil mit vertikaler Stirnfläche sowie einen nach vorn schräg vorkragenden Oberteil 14, 15, an dem jeweils ein Ende der hochsteifen Traverse 8 angeschlossen ist.

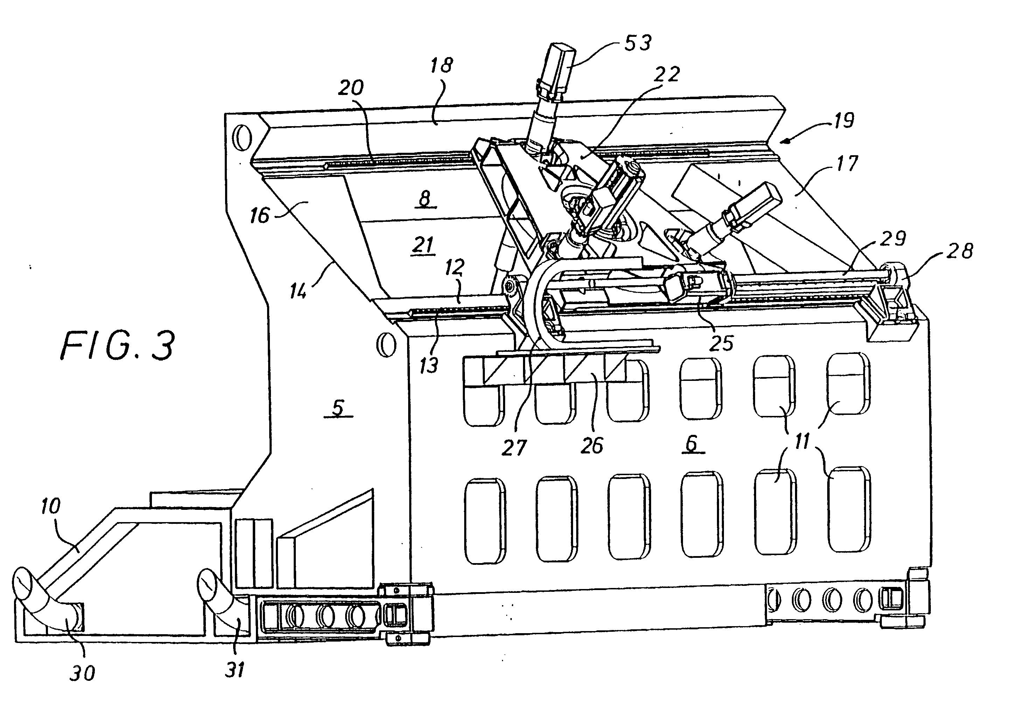

Wie insbesondere aus Fig. 3 ersichtlich, hat die mit einer Vielzahl von Ausnehmungen 11 versehene Rückwand 6 eine geringere Höhe als die Seitenwände 4, 5 und eine schräge Endfläche 12, auf der eine durchgehende Führungsschiene 13 fest montiert ist. Die Rückseite der beiden Seitenwände 4, 5 in ihrem oberen Teil 14, 15 verlaufen ebenfalls in einer Schräge nach oben vorne und sind mit den jeweiligen Enden der Traverse 8 dauerhaft verbunden. An der Innenseite jeder Seitenwand 4, 5 ist ein in der Schräge verlaufendes Deckelement 16, 17 vorgesehen, dessen Oberteil mit der Innenseite der Traverse 8 fest verbunden ist. In einem nach vorn oben durch einen formsteifen durchgehenden Steg 18 der Traverse 8 gebildeten Winkelbereich 19 ist eine weitere Führungsschiene 20 befestigt, deren Länge größer als der von den beiden Deckelementen 16, 17 begrenzte Freiraum 21 ist. Auf den beiden Führungsschienen 13, 20 ist ein Schlitten 22 verfahrbar geführt. Als Antriebsaggregat für die Fahrbewegungen des Schlittens dient hier ein Spindeltrieb (Kugelrollspindel), bestehend aus einer achsparallel oberhalb der Endfläche 12 der Rückwand 6 in zwei Lagerböcken 28 gelagerten Spindel 29 und einer Kugelroll-Mutter 25, die am Schlitten 22 montiert ist. Rückseitig an der Rückwand 6 ist ein Auflager 26 für ein Schleppkabel 27 montiert, über das die Energiezufuhr und Steuerung der verschiedenen vom Schlitten 22 getragenen Aggregate erfolgt.

Bei der Ausführung nach Fig. 1, 3 ist auf dem nach vorn über die Vorderkante der Seitenwände 4, 5 vorstehenden Unterbau 3 ein als Drehtisch ausgeführter Werkstücktisch 2 angeordnet, der zumindest in seinem hinteren Teil von einem u.a. von dem schrägen Bodenteil 7 begrenzten wannenförmigen Spänesammler umgeben ist. Zur Abführung der Flüssigkeiten und Späne dienen Anschlußrohre 30, 31, die aus der rechten Begrenzungswand 10 des Unterbaus herausführen.

Die in Fig. 2 dargestellte Universal-Fräs- und Bohrmaschine entspricht in ihrem Grundaufbau der Ausführung nach Fig. 1, so daß entsprechende Bauteile mit den gleichen Bezugszeichen wie in Fig. 1 versehen sind. Unterschiedlich zur Ausführung nach Fig. 1 ist ein variierter Unterbau 3, der als Träger für zwei nebeneinander angeordnete Werkstücktische 2a, 2b dient und entsprechend ausgebildet ist. Die wie bei der Ausführung nach Fig. 1 stationären Werkstücktische 2a, 2b können - wie dargestellt - auf dem Unterbau fest montiert oder aber auch als Drehtische gemäß Fig. 1 ausgebildet sein. Die Verwendung von zwei Werkstücktischen vergrößert die Spanleistung insgesamt z.B. durch die Möglichkeit einer wechselweisen Werkstück-Beschickung.

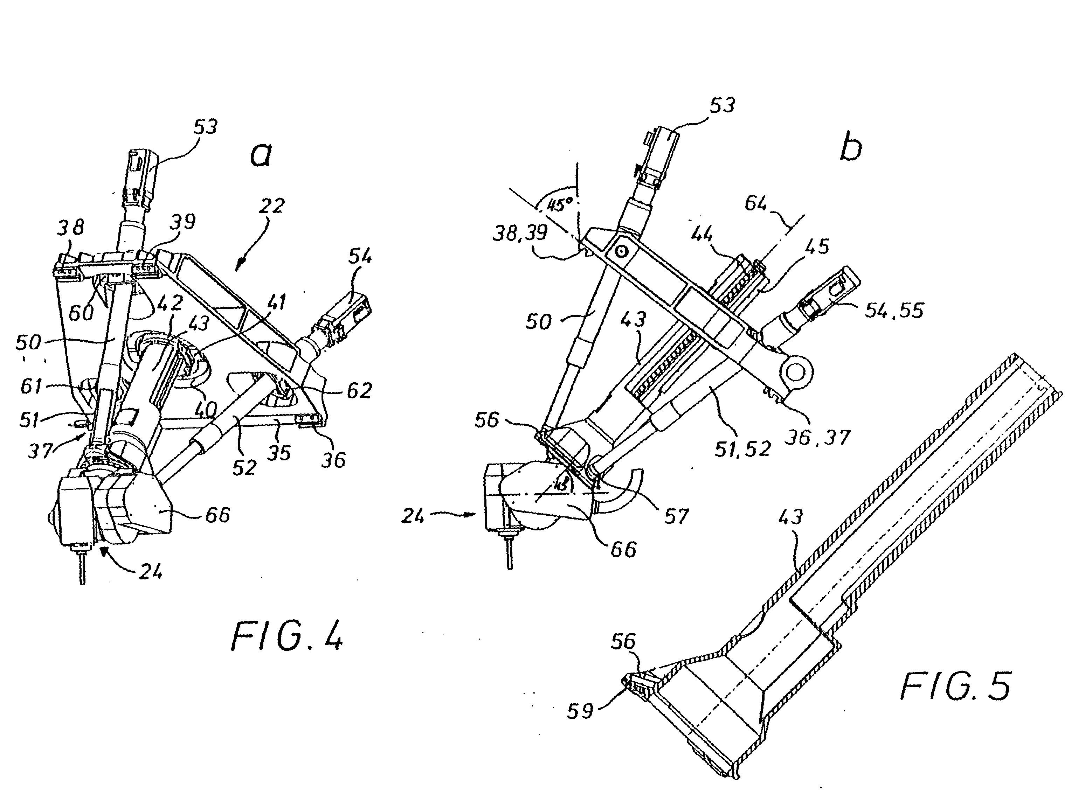

In beiden Maschinenausführungen nach Fig. 1 und Fig. 2 wird ein in Fig. 4 dargestelltes Tragsystem für die hier als Spindelkopf 24 ausgebildete Bearbeitungseinheit verwendet. Dieses Tragsystem enthält als wesentliches Bauelement den in flacher Kammerbauweise ausgebildeten hochsteifen Schlitten 22, der in Draufsicht die Form eines Dreiecks mit abgeschnittener Spitze hat. An der breiteren Rückseite 35 des Schlittens 22 sind im jeweiligen Eckbereich Führungsschuhe 36, 37 montiert, die beide mit der auf der schrägen Oberseite der Rückwand 6 montierten Führungsschiene 13 zusammenwirken. An der vorderen Schmalseite des Schlittens 22 befinden sich zwei weitere fest montierte Führungsschuhe 38, 39, die in der an der Traverse 8 vorgesehenen Führungsschiene 20 laufen. Diese besondere Form und Ausbildung des hochsteifen Schlittens gewährleistet eine exakte Einleitung der von der Bearbeitungseinheit auf den Schlitten übertragenen Belastungen in die jeweils hochsteifen Bauteile des Maschinengestells.

Im Schlitten 22 befindet sich eine zentrale kreisförmige Ausnehmung 40, in der ein Universallager 41 beispielsweise in Kardan-Ausführung montiert ist. In der Lagerbuchse 42 dieses Lagers 41 ist ein Zentralrohr 43 mit Hilfe von zwei diametral gegenüberliegenden Linearführungen 44 in Längsrichtung beweglich und verdrehfest geführt. In die beiden diametral gegenüberliegenden Kardan-Lagergruppen sind zwei - nicht dargestellte - Winkelmeßsysteme integriert, die entsprechende Meßwerte für die Programmsteuerung liefern. Daneben ist am Zentralrohr 43 ein sich in Längsrichtung erstreckender Linearmaßstab 45 befestigt, dem ein Meßelement zum Erfassen der Vorschubbewegungen des Zentralrohres 43 in dessen Längsrichtung zugeordnet ist.

Wie in Fig. 5 dargestellt ist das Zentralrohr-Gehäuse 43 einteilig ausgebildet, was gegenüber mehrteiligen Ausführungen die Steifigkeit und damit auch die Positioniergenauigkeit erhöht.

Zum Tragsystem der Bearbeitungseinheit 24 gehören ferner drei motorisch ausfahrbare Teleskopstäbe 50, 51, 52, an deren Außenrohr je ein Antriebsaggregat 53, 54, 55 angeflanscht ist. Durch Betätigung dieser Antriebsaggregate werden die inneren Stäbe der Teleskopstäbe aus- oder eingefahren. Die Enden dieser inneren Stäbe sind in Kugeldrucklagern 56, 57, 58 abgestützt, die in dem verbreiterten Endflansch 59 des Zentralrohr-Gehäuses 43 ausgebildet sind. An diesem Endflansch ist ein Spindelkopf-Träger 66 fest oder um die Mittelachse 64 des Zentralrohrs 43 verdrehbar montiert, an den der Spindelkopf 24 angebaut ist. In diesem Spindelkopf-Träger 66 verläuft die Spülflüssigkeit-Zuführung und es können Antriebe für die Arbeitsspindel sowie auch für deren Schwenk- und Drehbewegungen darin enthalten sein.

Neben der für die Bearbeitungsgenauigkeit regelmäßig entscheidenden hohen Steifigkeit des Maschinengestells hat die erfindungsgemäße Universal-Fräs- und Bohrmaschine der vorstehend beschriebenen Ausführungen die weiteren Vorteile einer bequemen und damit sicheren Zugänglichkeit zum Arbeitsraum, da der Werkstücktisch bezüglich den vorderseitig "ausgeschnittenen" Seitenwänden vorgebaut ist. Ein weiterer wesentlicher Vorzug ergibt sich durch die auch für unterschiedlichste Bearbeitungsvorgänge und Werkstückgrößen gleichbleibenden bewegten Massen, die beim erfindungsgemäßen Maschinentyp lediglich aus dem Schlitten mit den in diesem fest montierten Bauteilen bestehen. Die Verfahrbarkeit des kipp- und verwindungssteif abgestützten Schlittens in den beiden Führungsschienen 13 und 20 ermöglicht eine Optimierung der jeweiligen Bearbeitungsposition der Spindel in Bezug auf das feststehende Werkstück. Das durch die beiden Winkelmeßsysteme im Kardan-Lager des Zentralrohrs 43 und den Absolut-Linearmaßstab 45 gebildete Meßsystem ermöglicht die redundante Ermittlung der Position des Werkzeugs im Arbeitsraum incl. seiner Winkelstellung und bildet die Grundlage einer übergeordneten Lageregelung mit dem Ziel einer Steigerung der Positioniergenauigkeit. Darüber hinaus führt die einteilige Ausbildung des Zentralrohr-Gehäuses neben einer verbesserten Torsionssteifigkeit auch zu einer optimierten Festigkeit der KugelLagerungen, wobei im unteren verbreiterten Teil dieses Gehäuses ein Drehantrieb untergebracht sein kann. Der bevorzugte Winkelbereich der Schräglage des Tragelementes bzw. des Schlittens 22 liegt im Bereich von 30 bis 60°, wobei sich das Zentralrohr 43 in seiner normalen nicht ausgelenkten Mittelstellung senkrecht zur Schlittenebene erstreckt. Besonders zweckmäßig ist eine Schlittenanordnung unter einem 45°-Winkel zur Vertikalen (vgl. Fig. 4b), und zwar bei Verwendung eines Spindelkopf-Trägers 66 in Form eines gleichschenkeligen Prismas, an dessen einer Schenkelseite der Fräskopf angebaut ist. Durch eine einfache 180°-Drehung des Spindelkopf-Trägers 66 um die Achse 64 des Zentralrohrs 43 kann der Spindelkopf 24 aus der Vertikalstellung in die Horizontalstellung - und umgekehrt - gebracht werden.

Die Erfindung ist nicht auf die vorstehend beschriebenen Ausführungsbeispiele beschränkt. So kann beispielsweise bei kleineren Maschinenausführungen der Schlitten als integraler Bauteil einer oberen schrägen Deckwand ausgebildet sein, wobei in diesem Fall dann das Tragsystem für die Bearbeitungseinheit ortsfest ist. Die schräge Ausrichtung des Tragsystems sollte jedoch auch in diesem Fall erhalten bleiben, um damit auch die entsprechende Schrägstellung des Zentralrohres zu erzielen, da hierdurch günstige Verhältnisse bezüglich der maximalen Größe des Arbeitsraums incl. der Handhabung der Werkstücke beim Beschicken und auch während der Bearbeitung erzielt werden.

## Patentansprüche

1. Programmgesteuerte Universal-Fräs- und Bohrmaschine mit
- einem horizontalen Unterbau (3) als Träger eines Werkstücktisches (2),
- einem Maschinengestell (1) und
- einem Tragsystem (23) für mindestens einen Spindelkopf, das ein formsteifes Zentralrohr (43), einen an dessen unterem Ende befestigten Spindelkopf-Träger (66), drei um 120° raumwinkelversetzt angeordnete Teleskop-Stäbe (50, 51, 52), die in Universallagern am Spindelkopf-Träger angelenkt sind, und ein oberes Tragteil (22) enthält, das Universallager (41, 60, 61, 62) für das Zentralrohr (43) und für jeden Teleskopstab (50, 51, 52) aufweist,
**dadurch gekennzeichnet , daß**
- das Maschinengestell (1) zusammen mit dem Unterbau (3) als integrierte formsteife Tragkonstruktion ausgeführt ist und zwei Seitenwände (4, 5), eine vorderseitige obere Traverse (8) und eine niedrigere Rückwand (6) aufweist und
- das Tragteil (22) des Tragsystems (23) in Schräglage zwischen der Oberseite der Rückwand (6) und der Traverse (8) angeordnet ist.

2. Maschine nach Anspruch 1, **dadurch gekennzeichnet, daß** das Tragteil (22) als flacher formsteifer Schlitten ausgeführt und in Horizontalführungen (13, 20) der Rückwand (6) und der Traverse (8) motorisch verfahrbar ist.

3. Maschine nach Anspruch 2, **dadurch gekennzeichnet, daß** der in Kastenstruktur ausgeführte Schlitten (22) annähernd dreieckige Form hat und mit seiner längeren Rückseite über zwei endseitige Führungselemente (36, 37) auf einer Führungsschiene (13) an der schrägen Oberseite der Rückwand (6) sowie mit seiner kürzeren Frontseite über mindestens ein Führungselement (38) an einer Führungsschiene (20) der Traverse (8) verfahrbar abgestützt ist.

4. Maschine nach einem der Ansprüche 1 bis 3, **dadurch gekennzeichnet, daß** das Zentralrohr-Gehäuse (43) einteilig ausgebildet ist.

5. Maschine nach einem der vorstehenden Ansprüche, **dadurch gekennzeichnet, daß** auf dem Unterbau (3) zwei Werkstücktische (2a, 2b) nebeneinander angeordnet sind.

6. Maschine nach einem der vorstehenden Ansprüche, **dadurch gekennzeichnet, daß** der Bodenteil des Maschinengestells (1) bzw. des Unterbaus (3) einen wannenartigen Spänesammler enthält.

7. Maschine nach einem der vorstehenden Ansprüche, **dadurch gekennzeichnet, daß** der Spindelkopf-Träger (66) um die Längsachse (61) des Zentralrohrs (43) verdrehbar ist.

8. Maschine nach einem der Ansprüche 1 bis 7, **dadurch gekennzeichnet, daß** das vom Schlitten (22) gebildete Tragelement in einem Winkelbereich von 30 bis 60° zur Vertikalen, vorzugsweise in einem 45°-Winkel, ausgerichtet ist.

9. Maschine nach einem der Ansprüche 1 bis 8, **dadurch gekennzeichnet, daß** der Spindelkopf-Träger (66) als ein um die Zentralrohrachse (64) verdrehbares Prisma ausgebildet ist und der Fräskopf (24) an einer Schenkelseite des Prismas angebaut ist.

## Claims

1. A program-controlled universal combined milling and boring machine comprising
- a horizontal base (3) as a support of a work table (2),
- a machine frame (1), and
- a supporting system (23) for at least one spindle head, which contains a dimensionally stable central tube (43), a spindle head support (66) mounted on the lower end thereof, three telescopic bars (50, 51, 52) arranged at a solid angle displacement of 120° and coupled in universal bearings to the spindle head support, and a top supporting member (22) having universal bearings (41, 60, 61, 62) for the central tube (43) and for each telescopic bar (50, 51, 52),
**characterized in that**
- the machine frame (1) is designed together with the base (3) as an integrated dimensionally stable supporting structure and has two side walls (4, 5), a front top traverse (8) and a lower rear wall (6), and
- the supporting member (22) of the supporting system (23) is inclined between the top side of rear wall (6) and traverse (8).

2. The machine according to claim 1, **characterized in that** the supporting member (22) is designed as a flat dimensionally stable slide and can be moved in horizontal guides (13, 20) of rear wall (6) and traverse (8) by means of a motor.

3. The machine according to claim 2, **characterized in that** the box-shaped slide (22) has an approximately triangular shape and is movably supported via its longer rear side by means of two terminal guide elements (36, 37) on a guide rail (13) attached to the inclined top side of the rear wall (6) and via its shorter front side by means of at least one guide element (38) on a guide rail (20) of traverse (8).

4. The machine according to any of claims 1 to 3, **characterized in that** the central tube casing (43) is designed as a single part.

5. The machine according to any of the preceding claims, **characterized in that** two work tables (2a, 2b) are arranged side by side on base (3).

6. The machine according to any of the preceding claims, **characterized in that** the bottom part of the machine frame (1) or the base (3) contains a trough-shaped chip collector.

7. The machine according to any of the preceding claims, **characterized in that** the spindle head support (66) can be rotated about the longitudinal axis (61) of the central tube (43).

8. The machine according to any of claims 1 to 7, **characterized in that** the supporting element formed by the slide (22) is aligned at an angular range of 30 to 60° relative to the vertical, preferably at an angle of 45°.

9. The machine according to any of claims 1 to 8, **characterized in that** the spindle head support (66) is formed as a prism rotatable about the central tube axis (64) and the milling head (24) is attached to a side of the prism.

## Revendications

1. Fraiseuse-aléseuse universelle commandée par programme avec
- un châssis horizontal (3) comme support d'une table de pièces à usiner (2),
- avec un bâti de machine (1) et
- un système porteur (23) pour au moins une tête de broche, système qui comprend un tube central (43) à stabilité propre, un support (66) de la tête de la broche fixé à l'extrémité inférieure du tube central, trois barres télescopiques (50, 51, 52) disposées selon un angle de 120° de manière décalée par rapport à l'axe, barres télescopiques qui sont articulées dans des paliers universels au support de la tête de broche, et un élément porteur supérieur (22) qui comporte des paliers universels (41, 60, 61, 62) pour le tube central (43) et pour chaque barre télescopique (50, 51, 52),
**caractérisée en ce que**
- le bâti de machine (1) conjointement avec le châssis (3) est réalisé comme appareil porteur intégré à stabilité propre et comprend deux parois latérales (4, 5), une traverse supérieure (8) sur le devant et une paroi arrière (6) moins élevée et
- l'élément porteur (22) du système porteur (23) est disposé en position inclinée entre la partie supérieure de la paroi arrière (6) et la traverse (8).

2. Machine selon la revendication 1, **caractérisée en ce que** l'élément porteur (22) est réalisé comme coulisseau plat à stabilité propre et peut être déplacé de manière motorisée dans des glissières horizontales de guidage (13, 20) de la paroi arrière (6) et de la traverse (8).

3. Machine selon la revendication 2, **caractérisée en ce que** le coulisseau (22) réalisé dans une structure en caisse a une forme presque triangulaire et, avec son côté postérieur le plus long, est étayé de manière coulissante au-dessus de deux éléments de guidage (36, 37) côté extrémité sur une glissière de guidage (13) sur la partie supérieure oblique de la paroi arrière (6) et, avec sa partie avant la plus courte, est étayé de manière coulissante au-dessus d'au moins un élément de guidage (38) sur une des glissières de guidage (20) de la traverse (8).

4. Machine selon l'une des revendications 1 à 3, **caractérisée en ce que** le boîtier du tube central (43) est réalisé en une pièce.

5. Machine selon l'une des revendications précédentes, **caractérisée en ce que** deux tables de pièces à usiner (2a, 2b) sont disposées l'une à côté de l'autre sur le châssis (3).

6. Machine selon l'une des revendications précédentes, **caractérisée en ce que** le fond du bâti de machine (1) et/ou du châssis (3) comprend un collecteur de copeaux semblable à une cuve.

7. Machine selon l'une des revendications précédentes, **caractérisée en ce que** le support (66) de la tête de broche peut tourner autour de l'axe longitudinal (61) du tube central (43).

8. Machine selon l'une des revendications 1 à 7, **caractérisée en ce que** l'élément porteur formé par le coulisseau (22) est orienté de préférence à 45° à la verticale dans une ouverture d'angle allant de 30 à 60°.

9. Machine selon l'une des revendications 1 à 8, **caractérisée en ce que** le support de la tête de broche (66) est réalisé comme prisme rotatif autour de l'axe du tube central (64) et la tête de fraisage (24) est montée contre un côté du prisme.
